# EUROPÄISCHE PATENTSCHRIFT

(11) **EP 1 547 868 B1**
(45) Veröffentlichungstag und Bekanntmachung des Hinweises auf die Patenterteilung: **17.05.2006**
(21) Anmeldenummer: 04027714.7
(22) Anmeldetag: 23.11.2004
(51) Int. Cl.: B60R 1/12

(54) **Innenspiegel eines Kraftfahrzeugs mit elektrischen Funktionselementen**
Interior rearview mirror for a vehicle with electrical devices
Rétroviseur intérieur pour véhicule avec des équipements electriques

(30) Priorität: 27.11.2003 DE 10355465
(43) Veröffentlichungstag der Anmeldung: 29.06.2005
(73) Patentinhaber: DaimlerChrysler AG, 70567 Stuttgart (DE)
(72) Erfinder: Bochtler, Stefanie, 72124 Pliezhausen (DE); Katz, Werner, 72160 Horb (DE); Nickel, Volker, 72189 Vöhringen (DE); Schwed, Robert, 75385 Bad Teinach-Zavel (DE)

(56) Entgegenhaltungen:
- EP-A- 0 254 435
- DE-A- 19 736 482
- US-B1- 6 386 742

## Beschreibung

Die Erfindung betrifft einen Innenspiegel eines Kraftfahrzeugs mit einer Spiegelfläche und einem mit ihr verbundenem Gehäuse. In dem Gehäuse sind elektrische Funktionselemente angeordnet.

Solche Innenspiegel mit elektrischen Funktionselementen sind allgemein bekannt.

So zeigt die DE 197 36 482 A1, die dem Oberbegriff des Anspruchs 1 entspricht, einen Außenspiegel mit einem elektronischen Steuermodul, das beispielsweise eine Speichereinrichtung oder eine elektronische Einrichtung umfasst. Die elektronische Einrichtung ist mir einem oder mehreren elektrischen Bauteilen fest verbunden. Die elektrischen Bauteile können Einbruchsmeldesysteme, schlüssellose Zugangssysteme, Garagentüröffnungssysteme sein.
Das elektronische Steuermodul stellt eine mit dem Außenspiegel verbundene Einheit, die zur Wartung oder zum Austausch entfernt werden kann, dar.

Des Weiteren zeigt die EP 0 254 435 B1 einen Innenspiegel mit einer Trägereinrichtung zur Lagerung einer Leuchte, einer Steuerung oder eines Instruments auf.

Der Erfindung liegt die Aufgabe zugrunde einen Innenspiegel mit elektrischen Funktionselementen zu schaffen, der universell einsetzbar und einfach an Kundenwünsche anpassbar ist.

Erfindungsgemäß wird diese Aufgabe durch einen Innenspiegel mit den Merkmalen des Anspruches 1 gelöst.

Ein Innenspiegel eines Kraftfahrzeugs weist eine Spiegelfläche und ein mit ihr verbundenes Gehäuse auf. Er ist meist im Innenraum des Kraftfahrzeugs, mittig in einem Übergangsbereich zwischen einer Frontscheibe und einen Dach, angeordnet. In dem Gehäuse sind elektrische Funktionselemente angeordnet. Die Funktionselemente sind als Module ausgebildet und das Gehäuse weist zumindest einen Aufnahmeplatz zur Aufnahme von Modulen auf. In der Regel befinden sich mehrere Aufnahmeplätze nebeneinander, um mehrere Funktionselemente aufnehmen zu können. Ein Aufnahmeplatz ist so ausgebildet, dass verschiedenartige Module in dem Aufnahmeplatz auswechselbar aufnehmbar sind. Dies hat den Vorteil, dass je nach gewünschter Funktion das entsprechende Modul in den Aufnahmeplatz eingesteckt werden kann. Es können sowohl mehrere Aufnahmeplätze identisch, als auch verschieden für spezielle Modultypen ausgebildet sein. Ein weiterer Vorteil ist, dass eine Erstbestückung speziell nach Kundenwunsch schnell und kostengünstig erfolgen kann und ein späteres Nachrüsten oder Austauschen von Funktionselementen durch einen Austausch des Moduls möglich ist.

Unter Modulen sind austauschbare Funktionselemente mit jeweils vorbestimmten Funktionen zu verstehen, wobei jedes Modul einzelne Funktionen bereitstellt.

In einer vorteilhaften Ausführung sind die Module von außen zugänglich. Hierdurch wird ein Auswechseln der Module erleichtert.

Es ist auch vorgesehen, dass der Aufnahmeplatz eine lösbare elektrische Verbindung mit dem Modul aufweist. Die elektrische Verbindung kann sowohl eine Signalleitung, als auch eine Stromversorgung beinhalten. Dies hat den Vorteil, dass auch Module mit elektrischen Funktionselementen, wie beispielsweise einer Beleuchtung, einem Garagenöffner oder einem Mikrofon, eingesetzt werden können.

Vorteilhaft ist es die elektrische Verbindung als genormte Steckverbindung auszubilden. Hierdurch können Module mit elektrischen Funktionselementen, die ebenfalls eine entsprechende, genormte Steckverbindung aufweisen, gegeneinander ausgewechselt werden.
Weiterhin ist vorgesehen in dem Gehäuse eine Anschlussleiste anzuordnen, die die elektrische Verbindung trägt. Die elektrische Verbindung wird so sicher und stabil in dem Gehäuse gehaltert.

In einer weiteren Ausführung ist die elektrische Verbindung mit einem elektrischen System des Kraftfahrzeugs, insbesondere über einen Kabelstrang verbunden. Hierdurch kann das Modul, soweit es sich um ein elektrisches Funktionselement handelt, durch eine zentrale Steuereinheit des Kraftfahrzeugs angesteuert werden oder eine solche ansteuern.

In einer weiteren Ausführung weist der Aufnahmeplatz eine lösbare mechanische Verbindung mit dem Modul auf, die beispielweise als Clipelement ausgeführt sein kann. Durch die lösbare mechanische Verbindung kann das Modul ohne eine Beschädigung der Verbindung auf einfache Art ausgewechselt werden und wird dennoch sicher mechanisch gehalten.

Gemäß einer bevorzugten Weiterbildung der Erfindung weist das Gehäuse eine Blende zur Abdeckung eines leeren oder nur teilweise genutzten Aufnahmeplatzes auf. Dies hat den Vorteil das Module verschiedener Größe in dem Aufnahmeplatz aufgenommen werden können und falls bei Modulen mit kleineren Abmessungen oder falls kein Modul aufgenommen ist ein Spalt entsteht, dieser durch die Blende zuverlässig abgedeckt wird.

Von Vorteil ist es auch, wenn der Aufnahmeplatz eine Führung, vorzugsweise eine Schiene, für verschiedenartige Module aufweist. Hierdurch wird das Modul bei einem Ein- oder Ausbau geführt und dieser wird dadurch erleichtert.

Eine weitere Möglichkeit der Gestaltung ist es den Aufnahmeplatz im Inneren des Gehäuses anzuordnen. Vorteilhaft ist hierbei, dass die Module gegen äußere Einwirkungen geschützt sind und eine Beschädigung verhindert wird.

In den Figuren und der zugehörigen Beschreibung ist eine Ausführung der Erfindung dargestellt und erläutert, dabei zeigen
- Fig. 1: einen Innenspiegel eines Kraftfahrzeugs,
- Fig. 2: den Innenspiegel eines Kraftfahrzeugs in einer Schnittdarstellung und
- Fig. 3: eine weitere Schnittdarstellung des Kraftfahrzeuginnenspiegels.

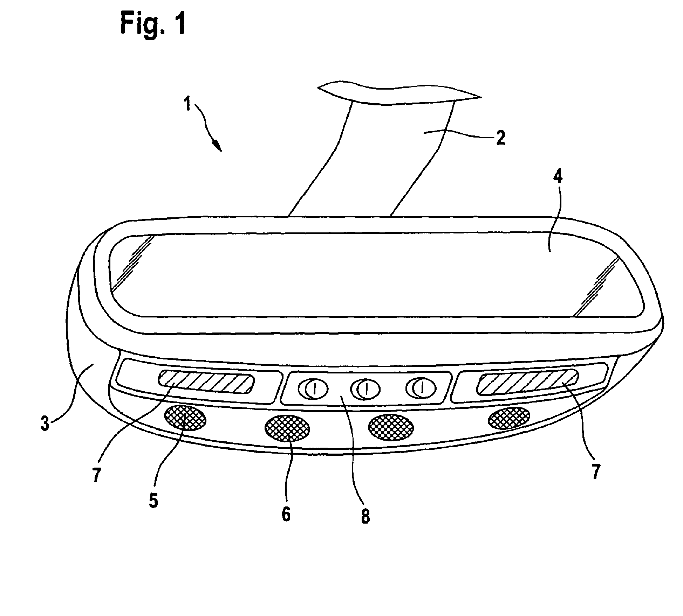

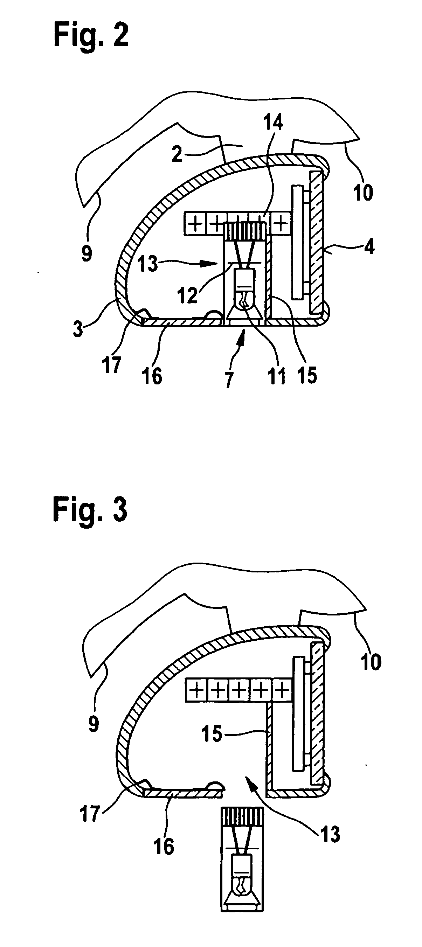

Fig. 1 zeigt einen Innenspiegel 1 eines Kraftfahrzeugs in einer perspektivischen Darstellung. Der Innenspiegel 1 ist mit einer Halterung 2 verbunden. Die Halterung 2 ist im Innenraum des Kraftfahrzeugs, mittig in einem Übergangsbereich zwischen einer Frontscheibe 9 und einen Dach 10, angeordnet. Die Frontscheibe 9 und das Dach 10 sind in Fig. 2 näher dargestellt. Der Innenspiegel 1 weist ein Gehäuse 3 auf und an einer dem Fahrer zugewandten Seite des Innenspiegels 1 befindet sich eine Spiegelfläche 4, mit der ein Fahrer einen rückwärtigen Bereich des Kraftfahrzeugs einsehen kann.
Auf der Unterseite des Innenspiegels 1 sind verschiedene Funktionselemente 5, 6, 7, 8 angeordnet. Ein Funktionselement ist als ein Mikrofon 5 ausgebildet. Das Mikrofon 5 ist über ein elektrisches System beispielsweise mit einer Freisprecheinrichtung für ein Mobiltelefon verbunden. Mit Hilfe eines Spracherkennungssystems können so verschiedene Funktionen des Mobiltelefons, insbesondere ein Telefonbuch, aufgerufen werden. Das Mikrofon 5 kann aber auch als Eingabegerät für ein Spracherkennungssystem dienen, mit dessen Hilfe die Funktionen eines Navigationssystems oder sonstiger Systeme in dem Kraftfahrzeug gesteuert werden.
Ein weiteres Funktionselement ist als Sensor 6 für eine Raumüberwachung ausgebildet. Eine Alarmanlage des Kraftfahrzeugs kann so über den Sensor 6 mit der Raumüberwachung einen Einbruch in das Fahrzeuginnere erkennen.
Als Beleuchtungseinrichtung 7 ist eine weiteres Funktionselement ausgebildet. Die Beleuchtungseinrichtung 7 ist in Figur 2 näher dargestellt und weist eine Lichtquelle, wie beispielsweise eine Glühlampe 11, und einen Reflektor 12 auf. Hierdurch kann der Innenraum, insbesondere in einem Bereich des Fahrers bzw. Beifahrers, beleuchtet werden. Der Innenspiegel 1 weist zwei, voneinander getrennt nutzbare, Beleuchtungseinrichtungen 7 auf. So kann der Beifahrer beispielweise etwas lesen, ohne dass der Fahrer hierdurch gestört wird.

Als weiteres Funktionselement weist der Innenspiegel elektrische Schalter 8 auf, über die beispielsweise eine Innenraumbeleuchtung gesteuert werden kann.
Neben den genannten Funktionselementen 5, 6, 7, 8 können auch andere oder weitere Funktionselemente, insbesondere ein Garagenöffner, ein Sensor für ein Fernöffnungssystem, ein Regensensor oder eine Abblendvorrichtung in dem Innenspiegel 1 angeordnet sein.
Alle Funktionselemente 5, 6, 7, 8 sind als Module ausgeführt, die in Aufnahmeplätzen angeordnet und gegeneinander austauschbar sind.

Fig. 2 zeigt eine Schnittdarstellung des Innenspiegels 1 des Kraftfahrzeugs. Der Innenspiegel 1 ist über die Halterung 2 in dem Übergangsbereich zwischen der Frontscheibe 9 und dem Dach 10 angeordnet. Die Beleuchtungseinrichtung 7 ist als ein Modul ausgebildet und in einen Aufnahmeplatz 13 eingeschoben. Der Aufnahmeplatz 13 befindet sich innerhalb des Gehäuses 3. Im oberen Bereich des Aufnahmeplatzes 13 befindet sich eine Anschlussleiste 14. Die Anschlussleiste 14 besteht aus mehreren genormte Steckverbindungen, die einen Signal-, Steuer-, und Stromversorgungsanschluss aufweisen.
Die Beleuchtungseinrichtung 7 ist über die Anschlussleiste 14 mit dem Bordnetz des Kraftfahrzeuges verbunden und weist die Glühlampe 11 und den Reflektor 12 auf.
Eine Führung 15, die als Schiene ausgebildet ist, erleichtert ein Einsetzen des Moduls, da durch sie eine Bewegungsrichtung des Moduls vorgegeben wird und sich das Modul so leichter in die Anschlussleiste 14 einstecken läßt.
Im unteren Bereich des Gehäuses 3 befindet sich eine Blende 16. Der Aufnahmeplatz 13 kann Module verschiedener Größen aufnehmen. Bei Modulen mit kleineren Abmessungen, wie beispielsweise der Beleuchtungseinrichtung 7, entsteht zwischen dem Gehäuse 3 und dem Modul ein Spalt. Ebenso entsteht ein Spalt, wenn ein Aufnahmeplatz 13 nicht mit einem Modul belegt ist. Dieser Spalt wird durch die Blende 16 zuverlässig abgedeckt, um so ein besseres optisches Erscheinungsbild des Innenspiegels zu erreichen.

Fig. 3 zeigt ebenfalls eine Schnittdarstellung des Innenspiegels 1 des Kraftfahrzeugs. In dieser Darstellung ist die Beleuchtungseinrichtung 7 ausgebaut. Der Aufnahmeplatz 13 ist leer. Die Blende 16 ist über ein Drehgelenk 17 mit dem Gehäuse verbunden. Sobald größere Module in den Aufnahmeplatz 13 eingeschoben werden, kann so die Blende 16 aus einer, in der Fig. 3 dargestellten, waagrechten Position nach oben klappen.

## Patentansprüche

1. Innenspiegel (1) eines Kraftfahrzeugs, der eine Spiegelfläche (4) und ein mit ihr verbundenes Gehäuse (3) aufweist, wobei in dem Gehäuse (3) elektrische Funktionselemente (5, 6, 7, 8) angeordnet sind,
**dadurch gekennzeichnet,**
**dass** die Funktionselemente (5, 6, 7, 8) als Module ausgebildet sind und das Gehäuse (3) zumindest einen Aufnahmeplatz (13) zur Aufnahme von Modulen und eine Anschlussleiste aufweist, wobei der Aufnahmeplatz (13) eine lösbare elektrische Verbindung, die als genormte Steckverbindung ausgebildet ist, aufweist und so ausgebildet ist,
**dass** verschiedenartige Module in dem Aufnahmeplatz (13) auswechselbar aufnehmbar sind.

2. Innenspiegel eines Kraftfahrzeugs nach Anspruch 1,
**dadurch gekennzeichnet,**
**dass** die Module von außen zugänglich sind.

3. Innenspiegel eines Kraftfahrzeugs nach Anspruch 1 oder 2,
**dadurch gekennzeichnet,**
**dass** die Anschlussleiste (14) die elektrische Verbindung trägt.

4. Innenspiegel eines Kraftfahrzeugs nach einem der vorhergehenden Ansprüche,
**dadurch gekennzeichnet,**
**dass** die elektrischen Verbindung oder die Anschlussleiste (14) mit einem elektrischen System des Kraftfahrzeugs, verbunden ist.

5. Innenspiegel eines Kraftfahrzeugs nach einem der vorhergehenden Ansprüche,
**dadurch gekennzeichnet,**
**dass** die elektrischen Verbindung oder die Anschlussleiste (14) mit einem elektrischen System des Kraftfahrzeugs, über einen Kabelstrang verbunden ist.

6. Innenspiegel eines Kraftfahrzeugs nach einem der vorhergehenden Ansprüche,
**dadurch gekennzeichnet,**
**dass** der Aufnahmeplatz (13) eine lösbare mechanische Verbindung mit dem Modul aufweist.

7. Innenspiegel eines Kraftfahrzeugs nach einem der vorhergehenden Ansprüche,
**dadurch gekennzeichnet,**
**dass** das Gehäuse eine Blende (16) zur Abdeckung eines leeren oder nur teilweise genutzten Aufnahmenplatzes (13) aufweist.

8. Innenspiegel eines Kraftfahrzeugs nach einem der vorhergehenden Ansprüche,
**dadurch gekennzeichnet,**
**dass** der Aufnahmeplatz (13) eine mechanische Führung (15), vorzugsweise eine Schiene, für verschiedenartige Module aufweist.

9. Innenspiegel eines Kraftfahrzeugs nach einem der vorhergehenden Ansprüche,
**dadurch gekennzeichnet,**
**dass** der Aufnahmeplatz (13) eine Schiene, für verschiedenartige Module aufweist.

10. Innenspiegel eines Kraftfahrzeugs nach einem der vorhergehenden Ansprüche,
**dadurch gekennzeichnet,**
**dass** der Aufnahmeplatz (13) im Inneren des Gehäuses (3) angeordnet ist.

## Claims

1. Interior rearview mirror (1) of a motor vehicle, comprising a mirror surface (4) and a housing (3) connected to it, electrical functional elements (5, 6, 7, 8) being disposed in the housing (3),
**characterised in that**
the functional elements (5, 6, 7, 8) are provided in the form of modules and the housing (3) has at least one mounting compartment (13) for accommodating modules and a terminal block, and the housing compartment (13) has a releasable electrical connection which is provided in the form of a standardised plug-in connection and is designed so that modules of different types can be interchangeably accommodated in the housing compartment (13).

2. Interior rearview mirror of a motor vehicle as claimed in claim 1,
**characterised in that**
the modules are accessible from outside.

3. Interior rearview mirror of a motor vehicle as claimed in claim 1 or 2,
**characterised in that**
the terminal block (14) supports the electrical connection.

4. Interior rearview mirror of a motor vehicle as claimed in one of the preceding claims,
**characterised in that**
the electrical connection or the terminal block (14) is connected to an electrical system of the motor vehicle.

5. Interior rearview mirror of a motor vehicle as claimed in one of the preceding claims,
**characterised in that**
the electrical connection or the terminal block (14) is connected to an electrical system of the motor vehicle via a cable run.

6. Interior rearview mirror of a motor vehicle as claimed in one of the preceding claims,
**characterised in that**
the mounting compartment (13) has a releasable mechanical connection to the module.

7. Interior rearview mirror as claimed in one of the preceding claims,
**characterised in that**
the housing has a screen (16) for concealing an empty or only partially used housing compartment (13).

8. Interior rearview mirror of a motor vehicle as claimed in one of the preceding claims,
**characterised in that**
the housing compartment (13) has a mechanical guide (15), preferably a rail, for modules of different types.

9. Interior rearview mirror of a motor vehicle as claimed in one of the preceding claims,
**characterised in that**
the housing compartment (13) has a rail for modules of different types.

10. Interior rearview mirror of a motor vehicle as claimed in one of the preceding claims,
**characterised in that**
the housing compartment (13) is disposed in the interior of the housing (3).

## Revendications

1. Rétroviseur intérieur (1) d'un véhicule, qui comporte un miroir (4) et un boîtier (3) relié á ce dernier, des éléments fonctionnels électriques (5, 6, 7, 8) étant disposés dans le boîtier (3), **caractérisé en ce que** les éléments fonctionnels (5, 6, 7, 8) sont réalisés sous forme de modules et **en ce que** le boîtier (3) comporte au moins un logement (13) pour accueillir des modules et une barre de raccordement, le logement (13) comportant une liaison électrique amovible réalisée sous forme de fiche de raccordement standardisée et de telle manière que des modules de types différents puissent être accueillis dans le logement (13) et remplacés.

2. Rétroviseur intérieur d'un véhicule selon la revendication 1, **caractérisé en ce que** les modules sont accessibles de l'extérieur.

3. Rétroviseur intérieur d'un véhicule selon la revendication 1 ou 2, **caractérisé en ce que** la barre de raccordement (14) porte la liaison électrique.

4. Rétroviseur intérieur d'un véhicule selon l'une quelconque des revendications précédentes, **caractérisé en ce que** la liaison électrique ou la barre de raccordement (14) sont reliées à un système électrique du véhicule.

5. Rétroviseur intérieur d'un véhicule selon l'une quelconque des revendications précédentes, **caractérisé en ce que** la liaison électrique ou la barre de raccordement (14) sont reliées à un système électrique du véhicule via un faisceau de câbles.

6. Rétroviseur intérieur d'un véhicule selon l'une quelconque des revendications précédentes, **caractérisé en ce que** le logement (13) comporte une liaison mécanique amovible avec le module.

7. Rétroviseur intérieur d'un véhicule selon l'une quelconque des revendications précédentes, **caractérisé en ce que** le boîtier comporte un couvercle (16) pour recouvrir un logement (13) vide ou utilisé en partie seulement.

8. Rétroviseur intérieur d'un véhicule selon l'une quelconque des revendications précédentes, **caractérisé en ce que** le logement (13) comporte un guidage mécanique (15), de préférence un rail, pour des modules de types différents.

9. Rétroviseur intérieur d'un véhicule selon l'une quelconque des revendications précédentes, **caractérisé en ce que** le logement (13) comporte un rail pour des modules de types différents.

10. Rétroviseur intérieur d'un véhicule selon l'une quelconque des revendications précédentes, **caractérisé en ce que** le logement (13) est disposé à l'intérieur du boîtier (3).
